# FASCICULE DE BREVET EUROPEEN

(11) **EP 1 175 638 B1**
(45) Date de publication et mention de la délivrance du brevet: **28.07.2004**
(21) Numéro de dépôt: 00925512.6
(22) Date de dépôt: 05.05.2000
(51) Int. Cl.: G02C 5/22

(54) **COMPOSANT D'ARTICULATION ELASTIQUE POUR MONTURE OPTIQUE**
FEDERSCHARNIERBAUTEIL FÜR BRILLENFASSUNG
ELASTIC ARTICULATING COMPONENT FOR OPTICAL FRAME

(30) Priorité: 06.05.1999 FR 9906124
(43) Date de publication de la demande: 30.01.2002
(73) Titulaire: CHEVASSUS S.A., F-39400 Morez (FR)
(72) Inventeur: HOTELLIER, Christophe, F-39400 Morez (FR)
(74) Mandataire: Moinas, Michel
(86) Numéro de dépôt international: PCT/IB2000/000582
(87) Numéro de publication internationale: WO 2000/068730

(56) Documents cités:
- EP-A- 0 615 149
- EP-A- 0 856 763
- WO-A-96/29623
- FR-A- 2 684 456
- FR-A- 2 694 643
- FR-A- 2 739 197

## Description

L'invention se rapporte à un composant d'articulation élastique d'une monture optique.

L'invention se rapporte de façon plus particulière à un composant d'articulation élastique d'une monture optique, qui comprend un boîtier et une coulisse disposée à l'intérieur du boîtier. Un ressort est monté autour de la coulisse entre une butée et une douille de blocage elle-même montée autour de la coulisse. Un chamon d'articulation solidaire de la coulisse fait saillie hors du boîtier.

Le composant d'articulation élastique est destiné à être fixé sur une branche d'une monture optique et articulé à un deuxième composant d'articulation lui-même fixé à un tenon de façade de la monture pour former une charnière de monture. Un axe d'articulation relie le chamon du composant d'articulation élastique à deux charnons à came solidaires du deuxième composant d'articulation.

La came est conformée pour comprimer le ressort du composant d'articulation élastique plus fortement lorsque la branche est dans une position de pivotement intermédiaire entre une position de fermeture et une position d'ouverture normale. Il en résulte un rappel élastique de la branche vers l'une ou l'autre de ces deux positions, leur conférant un caractère stable.

Dans la position d'ouverture normale, la branche est en appui contre le tenon de façade de la monture. Si l'on écarte la branche au-delà de la position d'ouverture normale, on exerce à nouveau une pression sur le boîtier par rapport au chamon contre la compression du ressort. Il en résulte un rappel élastique de la branche, conférant un caractère instable à la position de surouverture.

Un composant d'articulation élastique d'une monture optique du type indiqué précédemment est connu notamment du document FR 2 694 643 publié le 11 février 1994.

Selon un mode de réalisation décrit dans ce document, le boîtier possède une fente dans laquelle s'insère une partie saillante de la coulisse. Cet agencement permet à la fois de lier en rotation la coulisse et le boîtier, et de guider la translation de la coulisse par rapport au boîtier. On relève toutefois que le guidage est limité à la dimension longitudinale de la fente. De plus, le boîtier possède un logement de section circulaire, complémentaire d'une section de la douille montée autour de la coulisse. Ainsi, le guidage en translation de la coulisse à l'intérieur du logement est complété par le guidage en translation de la coulisse entre les pattes de la douille. Cependant, dans la région du logement où la douille sert de guidage à la coulisse, les jeux de guidage entre le logement, la douille et la coulisse s'additionnent, si bien qu'il peut en résulter un jeu relativement important lors de la translation de la coulisse par rapport au boîtier.

On relève également dans ce mode de réalisation connu que la douille possède deux pattes élastiques qui s'insèrent dans deux zones de retenue du logement du boîtier. Ces deux zones sont formées par une gorge qui a nécessité un usinage à l'aide d'un outil à gorge introduit à l'intérieur du boîtier. Compte-tenu des dimensions propres aux boîtiers de composants d'articulation dans le domaine des montures optiques, l'introduction de l'outil dans le logement longitudinal et l'usinage des zones de retenue à une certaine profondeur du logement restent des opérations délicates à réaliser.

De plus, le déploiement des pattes élastiques de la douille s'effectue suivant une direction définie de façon conventionnelle par largeur de boîtier. D'où un agencement imposant la largeur comme une dimension contraignante du boîtier.

Un autre exemple de composant d'articulation élastique est connu du document EP-A-0 856 763.

L'un de buts de l'invention est de réduire le jeu de guidage en translation de la coulisse dans le boîtier et de former avec une plus grande facilité des zones de retenue dans le logement du boîtier dans un composant d'articulation élastique d'une monture optique du type rappelé précédemment.

A cet effet, l'invention a pour objet un composant d'articulation élastique d'une monture optique selon la rev 1.

Le logement du boitier du composant possède une section complémentaire d'une section de la coulisse pour guider cette dernière en translation dans le boîtier, indépendamment de la douille de blocage. Cet agencement permet de réduire le jeu de guidage entre la coulisse et le boîtier. De préférence, la section de guidage est polygonale pour lier en rotation la coulisse et le boîtier.

L'ouverture de retenue de la douille est formée par perçage du boîtier. Cet agencement apporte une grande simplification par rapport à un usinage à l'intérieur du logement.

Selon un mode particulier de réalisation de l'invention, la douille possède une deuxième patte élastique s'insérant dans un évidement du logement. L'ouverture est formée dans un fond de fixation du boîtier à une branche de monture et l'évidement est aligné avec l'ouverture suivant une direction perpendiculaire au fond de fixation.

Cette direction définit la hauteur du boîtier. Ainsi, les pattes élastiques de la douille se déploient dans la hauteur, ce qui permet de diminuer l'encombrement dans une direction perpendiculaire, c'est-à-dire de façon conventionnelle dans la largeur du boîtier. De plus, l'ouverture du fond est masquée par la fixation du boîtier sur une branche de monture. Avantageusement, l'ouverture et la cavité sont obtenues simultanément par une opération de perçage perpendiculairement au fond.

D'autres avantages de l'invention apparaîtront à la lecture de la description d'un mode de réalisation illustré par les dessins.

La figure 1A est une vue en coupe longitudinale d'un composant d'articulation élastique d'une monture optique.

La figure 1B est une vue en coupe transversale du composant d'articulation élastique.

La figure 2A est une vue de face de la coulisse du composant, munie de la douille de blocage et du ressort de rappel.

La figure 2B est une vue dessus de la coulisse.

La figure 3A est une vue de face de la douille de blocage.

La figure 3B est une vue de côté de la douille.

La figure 4A est une vue de face du boîtier du composant.

La figure 4B est une vue de côté du boîtier.

La figure 4C est une vue de dessous du boîtier.

Dans la suite de la description, un même élément porte une même référence sur les différentes figures.

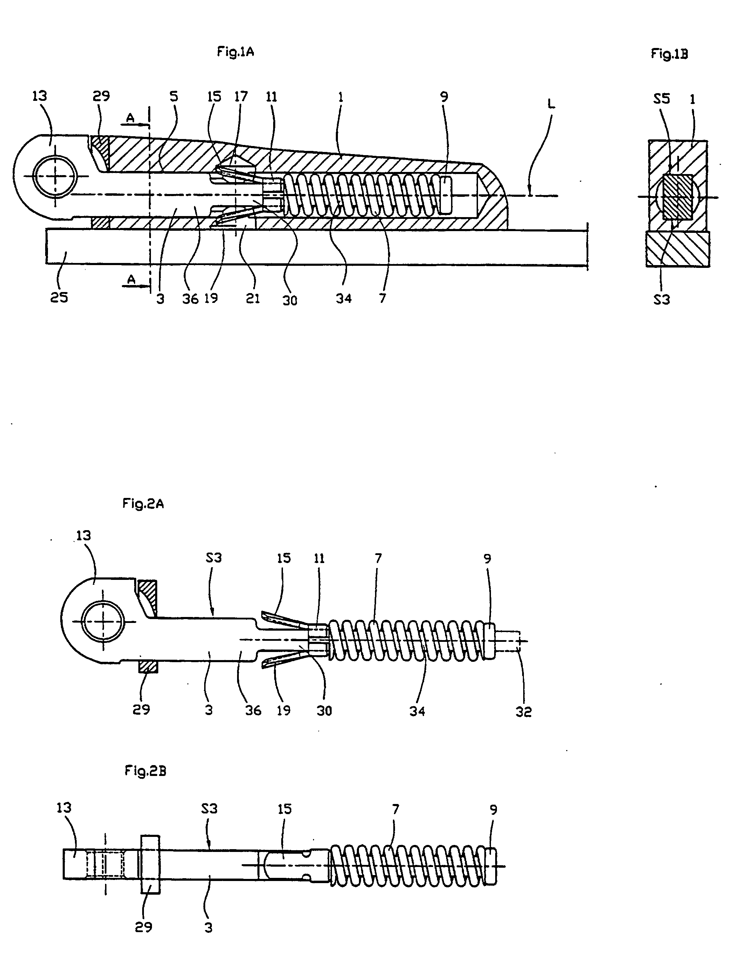

Un composant d'articulation élastique d'une monture optique, représenté par la figure 1A, comprend un boîtier 1 qui s'étend suivant une direction longitudinale L et une coulisse 3 disposée à l'intérieur du boîtier suivant la direction longitudinale. Un ressort 7 est monté entre une butée 9 et une douille de blocage 11 autour d'une tige 34 formant partie intégrante de la coulisse. La douille elle-même est montée autour de la tige 34. Un chamon d'articulation 13 solidaire de la coulisse fait saillie par rapport au boîtier.

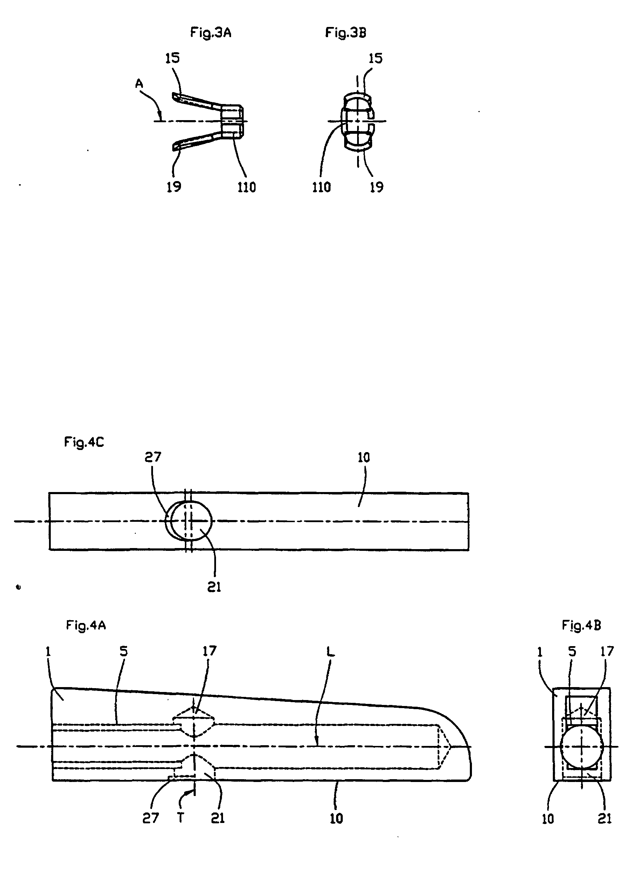

La douille de blocage 11, également visible sur les figures 3A et 3B, est une pièce découpée et roulée ayant une base 110 à section carrée complémentaire de la section carrée d'une extrémité 30 de la tige 34. Cet agencement permet de lier en rotation les deux éléments et augmente la surface d'appui du ressort contre la douille.

Selon l'invention, d'une part le boîtier 1 possède un logement 5 de guidage en translation de la coulisse 3. Comme visible sur la figure 1 B, le logement 5 présente une section S5 de forme rectangulaire, et plus généralement de forme polygonale. La coulisse 3 présente elle aussi, comme visible sur les figures 2A et 2B, une partie de guidage 36 de section S3 rectangulaire ou polygonale complémentaire de la section du logement 5 pour permettre un guidage en translation de la coulisse à l'intérieur du boîtier. De plus, la forme rectangulaire ou polygonale des deux sections permet de lier en rotation les deux éléments.

Cet agencement limite le jeu de guidage entre la coulisse et le boîtier à ces deux éléments. Autrement dit, la douille de blocage n'est pas conçue comme pièce intermédiaire de guidage entre la coulisse et le boîtier.

Il faut noter que la tige 34 ainsi que la partie de guidage 36 et le chamon 13 de la coulisse 3 sont réalisés par découpage en une seule pièce, ou sont assemblés par exemple par sertissage ou par collage. Dans le cas du sertissage, l'extrémité de la tige 34 est crantée et s'insère dans un perçage longitudinal de la coulisse.

D'autre part, la douille possède une première patte élastique 19 s'insérant dans une ouverture 21 du boîtier 1 débouchant dans le logement 5. Comme indiqué précédemment, l'ouverture 21 est formée par perçage du boîtier, ce qui apporte une grande simplification par rapport à un usinage réalisé à l'intérieur du logement.

Les figures 4A et 4B donnent une illustration préférée du composant d'articulation, dans lequel la douille 11 possède une deuxième patte élastique 15 s'insérant dans un évidement 17 du logement 5. L'ouverture 21 est formée dans un fond de fixation 10 du boîtier 1 à une branche de monture 25, et l'évidement 17 est aligné suivant une direction T perpendiculaire au fond de fixation 10.

. Comme indiqué précédemment, cette direction T définit la hauteur du boîtier. Les pattes élastiques 15 et 19 se déploient suivant la hauteur du boîtier, ce qui permet de diminuer l'encombrement de cet élément dans la largeur, c'est-à-dire dans la direction perpendiculaire à la fois à la hauteur et à la direction longitudinale du boîtier. A titre d'exemple, la largeur du composant d'articulation selon l'invention peut être aussi réduite que 2 millimètres (mm). Une plus faible largeur de boîtier permet d'utiliser une plus faible largeur de branche de monture, ce qui ajoute à l'esthétique de l'ensemble.

Avantageusement, l'ouverture 21 et l'évidement 17 sont obtenus simultanément par perçage du fond suivant la hauteur. De plus, l'ouverture 21 du fond 10 est masquée par la fixation du boîtier contre la branche de monture 25. Cet agencement ajoute encore à l'esthétique de la monture, et se distingue ainsi des boîtiers où les ouvertures sont percées dans la largeur et restent apparentes. Un agencement de ce type est connu du document FR-A-2 684 456.

Il est prévu de former un chanfrein 27 circulaire ou semi-circulaire sur le bord de l'ouverture traversante 21 du côté du fond de fixation 10, pour prévenir une accumulation de soudure sur le pourtour ou seulement sur la partie avant du perçage de l'ouverture, dans le cas où le boîtier est soudé à la branche de monture.

Les pattes élastiques 15 et 19 de la douille 11 s'insèrent dans les zones de retenue 17 et 21 du logement 5 pour bloquer la douille 11 par rapport au boîtier 1 lorsque celui-ci est déplacé par rapport au chamon d'articulation 13 contre la compression du ressort 7. Les figures 3A et 3B donnent une illustration préférée de la douille de blocage 11 et de ses deux pattes élastiques 15 et 19, disposées de façon symétrique par rapport à la direction axiale A perpendiculaire à la base de section rectangulaire 110 de la douille. Il faut noter que l'extrémité des pattes élastiques 15 et 19 est de préférence arrondie pour augmenter la surface d'appui dans les zones de retenues 17 et 21 du boîtier.

Il faut noter également que, lorsque la douille 11, figure 1A, est montée autour de la tige 34 et guidée par la complémentarité des sections carrées de la base de la douille 11 et de l'extrémité 30 la tige 34, les deux pattes élastiques 15 et 19 répartissent l'effort de compression du ressort suivant une résultante parallèle à la coulisse 3. Il en résulte une réduction du frottement de contact entre la douille et la coulisse, limitant ainsi la résistance au coulissement de la coulisse dans le logement du boîtier, et protégeant ces deux pièces contre une usure prématurée.

Les figures 2A et 2B donnent une illustration préférée de la coulisse 3. La section de guidage S3 est de forme rectangulaire ou polygonale et complémentaire de la section de guidage du logement 5. Cet agencement permet de lier en rotation les deux éléments. Il faut noter que l'extrémité 30 de la tige 34 possède une section inférieure à celle de la section de guidage S3 pour permettre aux pattes élastiques de se replier lors de l'insertion de la coulisse dans le logement du boîtier.

Il est prévu de remplacer la tige 34 de la coulisse par un fil en matériau résistant, comme un acier inoxydable ou un alliage à durcissement. Ce fil se présente par exemple sous la forme d'un rouleau pour être serti ou soudé au chamon 13 et coupé à une longueur désirée. Il faut noter qu'au moment de souder le fil et le chamon, la douille de blocage 11 et le ressort 7 ne sont pas encore montés autour du fil, et ne risquent donc pas d'être détériorés par le soudage. On peut utiliser un soudage à haute fréquence ou un soudage électrique avec apport d'un métal ou utiliser deux matériaux compatibles avec un soudage électrique sans apport.

De préférence, la butée 9 est formée par un écrasement réalisé dans le sens longitudinal d'une extrémité 32 de la tige 34 ou du fil. Sur la figure 2A, l'extrémité écrasée 32 est représentée en pointillé. Cet agencement apporte une simplification dans le nombre de pièces du composant d'articulation, supprimant un élément de butée à rapporter et réalisant une couronne circulaire d'appui du ressort.

Selon un autre avantage de l'invention, une pièce d'usure ou de frottement 29 est montée autour de la coulisse 3 entre le boîtier 1 et le chamon 13. Cette pièce permet d'une part de conserver une surface maximale à la surface de contact entre le boîtier et le deuxième composant d'articulation de la monture en butée contre le boîtier. D'autre part, cette pièce peut limiter le frottement entre le boîtier et les chamons à came du deuxième composant dans le cas où les matériaux du boîtier et des charnons sont incompatibles. Dans cet agencement, la pièce d'usure 29 est montée avec l'insertion de la coulisse 3 dans le logement 5 du boîtier.

Le boîtier du composant d'articulation élastique se prête à une fixation contre une branche de monture, comme visible sur les figures 1A et 1B, mais aussi à une fixation en bout de branche. Il est prévu que le boîtier soit partie intégrante de la branche de monture en étant usiné à son extrémité.

La coulisse est introduite dans le boîtier avec la douille et le ressort, après la fixation du boîtier contre la branche de monture. Dans le cas d'une soudure entre le boîtier et la branche de monture, ce mode d'assemblage protège le ressort contre une exposition à la chaleur qui lui serait préjudiciable.

Le fond de fixation fait partie intégrante du boîtier du composant d'articulation élastique. Cet agencement facilite la soudure du boîtier à la branche de monture. Dans le cas d'un boîtier ouvert dont le fond est constitué par la branche de monture elle-même, il faut prendre des précautions supplémentaires lors du soudage, puisqu'un apport en excès de soudure crée des chanfreins importants sur le pourtour inférieur du joint entre la branche de monture et le boîtier. Une remontée de soudure le long des parois du boîtier peut ainsi nuire à la translation de la coulisse à l'intérieur du boîtier.

Le boîtier à fond de fixation intégré permet de réaliser simplement la section de guidage du logement pour guider la coulisse en translation. Dans un boîtier ouvert, la section de guidage est tributaire de la fixation de la branche de monture. En particulier, l'épaisseur du joint de soudure détermine la hauteur du logement. Une variation d'épaisseur peut ainsi introduire suivant cette direction un jeu de guidage de la coulisse dans le logement.

## Revendications

1. Composant d'articulation élastique d'une monture optique, comprenant un boîtier (1) avec un logement (5), une coulisse (3) disposée à l'intérieur du boîtier, un ressort (7) monté autour de la coulisse entre une butée (9) et une douille de blocage (11) elle-même montée autour de la coulisse, et un chamon d'articulation (13) solidaire de la coulisse et saillant hors du boîtier, dans lequel la douille (11) possède une patte élastique (19) pour bloquer la douille par rapport au boîtier lorsque celui-ci est déplacé par rapport au charnon d'articulation (13) contre la compression du ressort (7), dans lequel le boîtier (1) possède un fond (10) et la coulisse possède une section de guidage (S3) de forme rectangulaire ou polygonale complémentaire de la section (S5) du logement (5) pour le guidage de la coulisse (3) en translation à l'intérieur du boîtier **caractérisé en ce que**:
la patte élastique (19) s'insère dans une ouverture de retenue de la douille (11) (21) débouchant dans le logement (5) formée par perçage du boîtier dans ledit fond (10), ledit fond servant de fixation (10) du boîtier (1) à une branche de monture (25).

2. Composant d'articulation élastique d'une monture optique selon la revendication 1, dans lequel la douille (11) possède une deuxième patte élastique (15) s'insérant dans un évidement (17) du logement (5), **caractérisé en ce que** l'évidement (17) est aligné avec l'ouverture (21) suivant une direction (T) perpendiculaire au fond de fixation (10).

3. Composant d'articulation élastique d'une monture optique selon la revendication 1 ou 2 **caractérisé en ce que** la coulisse (3) comprend un fil (34) écrasé à une extrémité (32) pour former la butée (9) du ressort (7).

## Patentansprüche

1. Bauteil für ein Federscharnier für ein Brillengestell mit einem ein Sitz (5) aufweisenden Gehäuse (1), mit einem im Inneren des Gehäuses angeordneten Gleitstück (3), mit einer um das Gleitstück zwischen einem Anschlag (9) und einer selbst um das Gleitstück angebrachten Blockierhülse (11) angebrachten Feder (7) und mit einem einstückig mit dem Gleitstück ausgebildeten und über das Gehäuse vorstehenden Scharnierteil (13), bei dem die Hülse (11) über eine federnde Lasche (19) verfügt, um die Hülse in Bezug auf das Gehäuse festzulegen, während dieses in Bezug auf das Scharnierteil (13) gegen die Wirkung der Feder (7) bewegt wird, bei dem das Gehäuse (1) einen Boden (10) besitzt und das Gleitstück zum Führen des Gleitstückes (3) beim Verschieben im Inneren des Gehäuses über einen Führungsabschnitt (S3) mit einem komplementär zu dem Querschnitt (S5) des Sitzes (5) ausgebildeten rechteckigem oder vieleckigen Querschnitt verfügt, **dadurch gekennzeichnet, dass** sich die federnde Lasche (19) in eine in den Sitz (5) mündende Rückhaltevertiefung (21) der Hülse (11) einfügt, die durch Aufbohren des Gehäuses in dem Boden (10) ausgebildet ist, wobei der Boden (10) des Gehäuses (1) zum Befestigen an einem Bügel des Gestelles (25) dient.

2. Bauteil für ein Federscharnier für ein Brillengestell nach Anspruch 1, bei dem die Hülse (11) über eine zweite federnde Lasche (15) verfügt, die sich in eine Ausnehmung (17) des Sitzes (5) einfügt, **dadurch gekennzeichnet, dass** die Ausnehmung (17) mit der Vertiefung (21) in einer rechtwinklig zu dem Befestigungsbereich (10) ausgerichteten Richtung (T) ausgerichtet ist.

3. Bauteil für ein Federscharnier für ein Brillengestell nach Anspruch 1 oder 2, **dadurch gekennzeichnet, dass** das Gleitstück (3) einen Draht (34) aufweist, der an einem Ende (32) gequetscht ist, um den Anschlag (9) der Feder (7) zu bilden.

## Claims

1. Resilient articulating component for an optical frame, comprising a case (1) with a receptacle (5), a slide (3) which is disposed inside the case, a spring (7) which is fitted around the slide, between a stop (9) and a locking socket (11), which itself is fitted around the slide, and an articulating knuckle (13), which is integral with the slide, and projects outside the case, wherein the socket (11) has a resilient tab (19) in order to lock the socket relative to the case, when the latter is displaced relative to the articulating knuckle (13), against the compression of the spring (7), wherein the case (1) has a base (10) and the slide (3) has a guiding cross-section (S3) with a polygonal shape which is complementary to the cross-section (S5) of the receptacle (5) to guide the slide (3) in translation inside the case, **characterised in that** the resilient tab (19) is inserted in a retention aperture to retain (21) the socket (11), which opens into the receptacle (5) formed in said base (10) by piercing of the case (1), said base (10) for securing the case (1) to a frame arm (25).

2. Resilient articulating component for an optical frame according to claim 1, wherein the socket (11) has a second resilient tab (15), which is inserted in a recess (17) in the receptacle (5), **characterised in that** the recess (17) is aligned with the aperture (21) in a direction (T) which is perpendicular to the base (10) for securing.

3. Resilient articulating component for an optical frame according to claim 1 or 2 **characterised in that** the slide (3) comprises a wire (34), which is crushed at one end (32), in order to form the stop (9) for the spring (7).
